# EUROPÄISCHE PATENTSCHRIFT

(11) **EP 4 630 143 B1**
(45) Veröffentlichungstag und Bekanntmachung des Hinweises auf die Patenterteilung: **26.08.2026**
(21) Anmeldenummer: 23818355.2
(22) Anmeldetag: 04.12.2023
(51) Int. Cl.: B01D 46/00, B01D 46/62

(54) **LUFTFILTER UND VERWENDUNG EINES FILTERELEMENTS IN EINEM LUFTFILTER**
AIR FILTER AND USE OF A FILTER ELEMENT IN AN AIR FILTER
FILTRE À AIR ET UTILISATION D'UN ÉLÉMENT FILTRANT DANS UN FILTRE À AIR

(30) Priorität: 06.12.2022 DE 102022132353
(43) Veröffentlichungstag der Anmeldung: 15.10.2025
(73) Patentinhaber: MANN+HUMMEL GmbH, 71636 Ludwigsburg (DE)
(72) Erfinder: DIRNBERGER, Timo, 71636 Ludwigsburg (DE); HEINZMANN, Matthias, 71636 Ludwigsburg (DE)
(74) Vertreter: Mann + Hummel Intellectual Property
(86) Internationale Anmeldenummer: PCT/EP2023/084130
(87) Internationale Veröffentlichungsnummer: WO 2024/121061

(56) Entgegenhaltungen:
- WO-A1-2006/125516
- US-A- 3 712 030
- US-A- 4 512 147
- US-A- 4 969 328
- US-A1- 2020 376 934

## Beschreibung

### Technisches Gebiet

Die Erfindung betrifft einen Luftfilter aufweisend
- zwei Filterelemente, die jeweils als Flachfilterelement ausgebildet sind und einen Filtermediumkörper mit einer Anströmfläche und einer Abströmfläche aufweisen,
- ein Filtergehäuse, in dem die beiden Filterelemente angeordnet sind,
- und eine Strömungsleitvorrichtung, um einen zu filternden Luftstrom wahlweise seriell durch die beiden Filterelemente oder zumindest teilweise an einem zweiten der Filterelemente vorbeizuleiten,
wobei die Abströmfläche eines ersten der Filterelemente und die Anströmfläche des zweiten der Filterelemente unter Ausbildung eines sich erweiternden Bypasskanals voneinander beabstandet sind.

### Stand der Technik

Ein solcher Luftfilter ist aus US 2020/0376934 A1 bekannt.

Für hochabscheidende Kabinenluftfilter werden häufig zwei Filterelemente eingesetzt. Ein erstes der Filterelemente kann ein Vorfilterelement zum Abscheiden größerer Partikel und/oder schädlicher Gase sein. Ein zweites der Filterelemente kann ein Feinfilterelement, beispielsweise ein HEPA-Filterelement, zum Abscheiden feinerer Partikel sein. Die Filterelemente sind grundsätzlich nacheinander durchströmbar.

Jedoch ist bei niedrigen Partikelkonzentrationen in der zu filternden Luft ein Einsatz des Feinfilterelements nicht zwingend erforderlich. Um den Druckverlust beim Durchströmen des Luftfilters, den Energiebedarf eines Gebläses des Luftfilters und die Geräuschentwicklung zu reduzieren, kann daher bei manchen Luftfiltern das Feinfilterelement umgangen werden. Die Luft wird hierzu nach dem Durchströmen des Vorfilterelements zwischen den beiden Filterelementen abgezogen. Hierfür ist zwischen den Filterelementen ein hinreichend groß dimensionierter Bypasskanal erforderlich. Um diesen einzurichten, müssen die Filterelemente entsprechend weit voneinander beabstandet sein. Dies vergrößert den Bauraumbedarf des Luftfilters.

Bei dem aus der eingangs genannten US 2020/0376934 A1 bekannten Luftfilter sind zwei quaderförmige Filterelemente vorgesehen, die schräg gegeneinander angestellt sind, sodass zwischen ihnen ein sich erweiternder Bypasskanal ausgebildet ist. Mittels einer Bypassklappe kann der Bypasskanal wahlweise geöffnet oder geschlossen werden, um ein Umströmen des zweiten Filterelements zu ermöglichen bzw. ein Durchströmen des zweiten Filterelements zu erzwingen.

Aus DE 10 2008 058 356 A1 ist ein Filterelement bekannt, umfassend einen Faltenbalg mit benachbarten oberen Faltenrücken und mit benachbarten unteren Faltenrücken, wobei die unteren Faltenrücken in einer Basisebene liegen und wobei die oberen Faltenrücken mit Faltenhöhen von der Basisebene abragen. Das Filterelement ist gekennzeichnet durch mindestens zwei unterschiedliche Faltenhöhen der oberen Faltenrücken. Dadurch kann das Filterelement unter Gewährleistung einer hohen Filtereffizienz und optimierten Führung des zu filternden Fluids in Filtergehäuse einsetzbar sein, die von einer Quaderform abweichen.

DE 10 2019 206 911 A1 beschreibt ein Luftfilterelement für eine Luftfiltereinrichtung eines Kraftfahrzeugs oder eines Innenraumluftfilters. Das Luftfilterelement weist einen plattenförmigen Filterkörper aus einem Filtermaterial und einen diesen umlaufenden Rahmen auf. Das Filtermaterial ist gefaltet, so dass der Filterkörper mehrere benachbarte durch Falze miteinander verbundene Falten aufweist, die in einer Filterlängsrichtung aufeinander folgen und sich in einer Filterquerrichtung erstrecken. Der Rahmen weist zwei sich parallel zur Filterquerrichtung erstreckende Längsendwandungen und zwei sich parallel zur Filterlängsrichtung erstreckende Seitenstreifen auf. Innerhalb des Filterkörpers ist wenigstens eine Kurzfaltengruppe aus wenigstens zwei einander in Filterlängsrichtung folgenden Falten gebildet, die in einer Filterhöhenrichtung kürzer als die benachbarten Falten sind. An der jeweiligen Kurzfaltengruppe ist wenigstens eine Aussparung in dem Rahmen ausgebildet. Im Bereich der jeweiligen Aussparung ist eine Biegelasche an dem Rahmen ausgeformt, die von dem Rahmen zu den Falten der jeweiligen Kurzfaltengruppe hin umgebogen ist. Die Biegelasche liegt an zumindest einigen Falzen der Kurzfaltengruppe auf und ist daran stoffschlüssig festgelegt.

Es ist eine Aufgabe der Erfindung, bei einem Luftfilter mit einem Vorfilterelement und einem wahlweise durchströmbaren oder umgehbaren Feinfilterelement, einen kompakten Bau und insbesondere bei Umgehung des Feinfilterelements einen geringen Durchströmungswiderstand zu ermöglichen.

### Offenbarung der Erfindung

Diese Aufgabe wird durch einen Luftfilter gemäß Anspruch 1 und eine Verwendung gemäß Anspruch 10 gelöst. Bevorzugte Ausführungsformen bzw. Varianten sind in den jeweiligen Unteransprüchen und der Beschreibung angegeben.

Erfindungsgemäß ist ein Luftfilter vorgesehen. Der Luftfilter kann insbesondere als Kabinenluftfilter eines Kraftfahrzeugs verwendet werden.

Der Luftfilter weist zwei Filterelemente auf. Die Filterelemente sind je als ein Flachfilterelement ausgebildet und weisen einen Filtermediumkörper mit einer Anströmflache und einer Abströmfläche auf. Im Betrieb durchströmt zu filternde Luft das jeweilige Filtermedium von dessen Anströmfläche zu seiner Abströmfläche.

Der Luftfilter weist ferner ein Filtergehäuse auf, in dem die beiden Filterelemente angeordnet sind.

Weiterhin weist der Luftfilter eine Strömungsleitvorrichtung auf, um einen zu filternden Luftstrom wahlweise seriell durch die beiden Filterelemente oder zumindest teilweise an einem zweiten der Filterelemente vorbeizuleiten. Die Strömungsleitvorrichtung ermöglicht es somit, in einem ersten Betriebszustand eine serielle Durchströmung des ersten und des zweiten Filterelements nacheinander zu erzwingen. Der Luftstrom wird dabei zuerst durch das erste und anschließend durch das zweite Filterelement geleitet. Für die Beschreibung der vorliegenden Erfindung wird das zunächst durchströmte Filterelement auch als das erste Filterelement bezeichnet; das anschließend durchströmte Filterelement wird auch als das zweite Filterelement bezeichnet. In einem zweiten Betriebszustand erlaubt die Strömungsleitvorrichtung eine Umgehung des (in Durchströmungsrichtung) zweiten Filterelements. Der Luftstrom kann dabei vollständig oder teilweise, insbesondere zu wenigstens 50 %, an dem zweiten Filterelement vorbeigeführt werden.

Das erste Filterelement kann ein Adsorptionsfilterelement, insbesondere enthaltend Aktivkohle, sein.

Das zweite Filterelement kann ein HEPA-Filterelement, vorzugsweise der Filterklasse H13 gemäß EN 1822-1:2009 oder besser, sein.

Die Abströmfläche eines ersten der Filterelemente und die Anströmfläche des zweiten der Filterelemente sind unter Ausbildung eines sich erweiternden Bypasskanals voneinander beabstandet. Der Bypasskanal erweitert sich grundsätzlich quer zu einer flächigen Erstreckungsrichtung zumindest eines der Filterelemente. Der Bypasskanal ermöglicht in dem zweiten Betriebszustand ein Ableiten der von dem ersten Filterelement gefilterten Luft, bevor diese das zweite Filterelement durchströmt. Indem sich der Bypasskanal in Richtung einer Bypassströmung durch den Bypasskanal oder mit anderen Worten zu einem Auslass des Luftfilters hin erweitert, wird das Abführen der von dem ersten Filterelement gefilterten Luft erleichtert; der Durchströmungswiderstand des Luftfilters wird reduziert.

Erfindungsgemäß weist der Filtermediumkörper zumindest eines der Filterelemente eine in sich veränderliche Höhe auf, wobei der Filtermediumkörper im Bereich einer größeren Weite des Bypasskanals eine geringere Höhe aufweist. Mit anderen Worten sind die Anströmfläche und die Abströmfläche des Filtermediumkörpers entlang des Bypasskanals unterschiedlich weit voneinander beabstandet. Die Filterelemente können somit nahe beieinander angeordnet werden, ohne den Bypasskanal zu verengen. Dadurch wird der Bauraumbedarf zur Unterbringung der beiden Filterelemente klein gehalten. Die Höhe bzw. Dicke des Filtermediumkörpers kann entlang einer Hauptdurchtrittsrichtung für Luft durch den Filtermediumkörper gemessen werden. Typischerweise wird die Höhe bzw. Dicke senkrecht zur Anströmfläche oder Abströmfläche des Filtermediumkörpers gemessen. Die Weite des Bypasskanals beschreibt insbesondere dessen Ausdehnung quer zur Hauptströmungsrichtung der Bypassströmung durch den Bypasskanal im zweiten Betriebszustand.

Der Filtermediumkörper kann mit einer Filtermatte, Schaum, einem Wabenkörper oder porösem Material gebildet sein.

Vorzugsweise ist der Filtermediumkörper mit Falten unterschiedlicher Höhe ausgebildet. Besonders bevorzugt sind beide Filtermediumkörper mit Falten ausgebildet. Der Filtermediumkörper kann bzw. die Filtermediumkörper können aus gefaltetem Filterpapier bestehen. Im Bereich der größeren Weite des Bypasskanals sind niedrigere Falten vorgesehen. Mit anderen Worten sind dem anderen Filterelement zugewandte Falzkanten der Falten des einen Filterelements von dem anderen Filterelement abgewandten Falzkanten unterschiedlich weit beabstandet. Mit niedriger werdenden Falten (kleinerer Abstand der Falzkanten) erweitert sich der Bypasskanal zunehmend.

Vorzugsweise erstrecken sich die Anströmfläche des ersten Filterelements und die Abströmfläche des zweiten Filterelements parallel zueinander. Dadurch kann ein besonders kompakter Bau des Luftfilters erhalten werden.

Die Höhe des Filtermediumkörpers nimmt - in Erweiterungsrichtung bzw. Durchströmungsrichtung des Bypasskanals - vorzugsweise kontinuierlich ab. Dies ist im Hinblick auf die Durchströmung des Bypasskanals vorteilhaft.

Alternativ kann die Höhe des Filtermediumkörpers - in Erweiterungsrichtung bzw. Durchströmungsrichtung des Bypasskanals - stufenweise abnehmen. Dies kann die Herstellung des Filterelements vereinfachen.

Bevorzugt ist auch, dass beide Filterelemente einen Filtermediumkörper mit in sich veränderlicher Höhe aufweisen. Dabei weisen die beiden Filtermediumkörper jeweils im Bereich der größeren Weite des Bypasskanals eine geringere Höhe auf. Die beiden Filterelemente können hierbei besonders dicht aneinander angeordnet werden, während der Bypasskanal mit geringem Widerstand durchströmbar bleibt.

Eine kleinste Höhe des einen oder beider Filtermediumkörper, insbesondere der Falten des einen Filterelements oder beider Filterelemente, kann wenigstens 5 mm, vorzugsweise wenigstens 8 mm, und/oder höchstens 20 mm, bevorzugt höchstens 15 mm, betragen.

Eine größte Höhe des einen oder beider Filtermediumkörper, insbesondere der Falten des einen Filterelements oder beider Filterelemente kann wenigstens 30 mm, vorzugsweise wenigstens 40 mm, und/oder höchstens 70 mm, bevorzugt höchstens 60 mm, betragen.

Das Filterelement mit veränderlicher Höhe kann wenigstens ein Rahmenelement aufweisen. Das Rahmenelement ermöglicht eine seitliche Abdichtung des Filtermediumkörpers. Das Rahmenelement kann ein Seitenband zur Abdichtung von Falten sein. Alternativ oder zusätzlich kann das Rahmenelement einen Kunststoffrahmen umfassen, in den der Filtermediumkörper mittelbar oder unmittelbar eingeklebt oder eingespritzt ist.

Das Rahmenelement steht im Bereich der niedrigeren Höhe über den Filtermediumkörper über. Insbesondere kann das Rahmenelement bzw. Seitenband im Bereich der niedrigeren Falten über Falzkanten der Falten überstehen. Das Rahmenelement kann eine im Wesentlichen konstante Höhe aufweisen. Das Rahmenelement weist vorteilhaft wenigstens einen Abschnitt geringeren Überstands, insbesondere eine Rücknehmung, auf. Mit anderen Worten ist der Überstand des Rahmenelements lokal reduziert. Bevorzugt weist das Filtergehäuse angrenzend an den Abschnitt geringeren Überstands einen Vorsprung auf. Der Vorsprung greift zumindest abschnittsweise in die Rücknehmung ein. Der Vorsprung kann von einer Seitenwand des Filtergehäuses nach innen ragen. Aufgrund des Vorsprungs kann das Filterelement nur in derjenigen Ausrichtung eingebaut werden, in welcher die Position des Abschnitts geringeren Überstands mit der Position des Vorsprungs zusammenfällt. Dadurch wird sichergestellt, dass sich der Bypasskanal in der gewünschten Richtung erweitert. Ein fehlerhafter Einbau des Filterelements wird ausgeschlossen. Zudem kann der Einbau untauglicher Filterelemente durch den Vorsprung verhindert werden, was beispielsweise Filterelemente betrifft, die bestimmte technische Erfordernisse nicht erfüllen, etwa eine vorgegebene Abscheideeffizienz.

Wenn beide Filterelemente eine veränderliche Höhe besitzen, können beide Filterelemente je wenigstens ein Rahmenelement aufweisen, welches jeweils im Bereich der niedrigeren Höhe über den Filtermediumkörper übersteht, wobei die Rahmenelemente je wenigstens einen Abschnitt geringeren Überstands, insbesondere eine Rücknehmung, aufweisen. Das Filtergehäuse kann angrenzend an die Abschnitte geringeren Überstands je einen Vorsprung aufweisen. Vorzugsweise ist am Filtergehäuse ein gemeinsamer Vorsprung vorgesehen, der an beide Abschnitte geringeren Überstands angrenzt, insbesondere zumindest abschnittsweise in beide Rücknehmungen eingreift. Die Herstellung des Filtergehäuses kann ggf. vereinfacht werden, wenn nur ein gemeinsamer Vorsprung vorgesehen ist.

Eines der Filterelemente, insbesondere das Filterelement mit veränderlicher Höhe und/oder ein relativ besser abscheidendes Filterelement, kann eine Dichtung aufweisen. Die Dichtung kann zwei Gehäuseteile des Filtergehäuses gegeneinander abdichten.

Vorzugweise bildet die Dichtung einen ersten und einen zweiten Dichtungsabschnitt aus, wobei der erste Dichtungsabschnitt den Filtermediumkörper umgibt und der zweite Dichtungsabschnitt eine durchströmbare Öffnung einschließt. Der erste Dichtungsabschnitt dient zur Abdichtung des Filtermediumkörpers gegenüber dem Filtergehäuse, insbesondere dichtet der erste Dichtungsabschnitt eine anströmseitige Rohseite gegenüber einer abströmseitigen Reinseite ab. Zusätzlich kann der erste Dichtungsabschnitt zur Abdichtung von Gehäuseteilen des Filtergehäuses dienen. Der zweite Dichtungsabschnitt mit der Öffnung dient typischerweise zur Abdichtung von Gehäuseteilen des Filtergehäuses. Die Öffnung ist grundsätzlich frei von Filtermaterial. Der zweite Dichtungsabschnitt mit der Öffnung kann auch als ein Henkel am Filterelement bezeichnet werden. Der zweite Dichtungsabschnitt mit der Öffnung befindet sich grundsätzlich (radial) außerhalb eines Querschnitts des Filtermediumkörpers. Der erste und der zweite Dichtungsabschnitt können ein gemeinsames Segment der Dichtung umfassen.

Ein Strömungspfad eines seriell durch die beiden Filterelemente geleiteten Luftstroms kann durch die Öffnung im zweiten Rahmensegment verlaufen. Dies kann die Strömungsführung und den Aufbau des Filtergehäuses vereinfachen.

Vorzugsweise ist eine fluidische Verbindung zwischen der Abströmseite des zweiten Filterelements und einem Auslass des Filtergehäuses nur durch die durchströmbare Öffnung hindurch eröffnet. Bei serieller Durchströmung beider Filterelemente strömt dann der gesamte gefilterte Luftstrom durch die Öffnung.

Die Dichtung kann mit Polyurethan, insbesondere Polyurethanschaum, gebildet sein. Die Dichtung kann an den Filtermediumkörper angeformt sein. Eine Härte der Dichtung kann wenigstens 13 Shore A und/oder höchstens 25 Shore A betragen. In einer anderen Ausführungsform kann die Dichtung an den Kunststoffrahmen eines Filterelements angespritzt sein, wobei die Dichtung insbesondere aus einem thermoplastischen Elastomermaterial bestehen kann. Die Dichtung kann insbesondere eine oder mehrere Dichtlippen umfassen, was vorteilhaft ist, um eine besonders gute Dichtigkeit bei vergleichsweise geringen Dichtungsvorspannkräften zu erreichen.

Vorzugsweise ist der zweite Dichtungsabschnitt der Dichtung durch ein Versteifungsteil ausgesteift. Dadurch kann sichergestellt werden, dass das zweite Rahmensegment an den vorgesehenen Dichtstellen des Filtergehäuses zur Anlage kommt. Die Dichtung kann an das Versteifungsteil angeformt sein. Insbesondere kann das Versteifungsteil in die Dichtung eingebettet sein. In einer anderen Ausführungsform kann der Kunststoffrahmen die von dem zweiten Dichtungsabschnitt umschlossene durchströmbare Öffnung umlaufen, wobei insbesondere auch der zweite Dichtungsabschnitt an den Kunststoffrahmen angespritzt ist.

An dem zweiten Dichtungsabschnitt kann eine Luftleitrippe vorgesehen sein. Die Durchströmung des Luftfilters kann dadurch insbesondere im Bereich der durchströmbaren Öffnung optimiert werden.

Vorzugsweise ist die Luftleitrippe einstückig mit dem Versteifungsteil ausgebildet. Dies vereinfacht die Herstellung des Filterelements.

Vorzugsweise ist die Strömungsleitvorrichtung mit einer Klappe gebildet, welche in einer ersten Stellung den Bypasskanal verschließt und in einer zweiten Stellung den Bypasskanal freigibt. Durch Verschwenken der Klappe kann in besonders einfacher Weise zwischen den Betriebszuständen gewechselt werden. In der zweiten Stellung kann die Klappe eine Durchströmung der durchströmbaren Öffnung des zweiten Dichtungsabschnitts der Dichtung ganz oder teilweise verhindern. Die Klappe kann eine oder mehrere Dichtlippen, insbesondere zur Anlage an Dichtstellen des Filtergehäuses, aufweisen. Typischerweise ist auslassseitig am Bypasskanal eine Dichtlippe zwischen dem Filtergehäuse und der Klappe vorgesehen, wobei die Dichtlippe am Filtergehäuse oder der Klappe ausgebildet sein kann.

In den Rahmen der vorliegenden Erfindung fällt auch eine Verwendung eines Filterelements, das als Flachfilterelement ausgebildet ist und einen Filtermediumkörper mit einer Anströmflache und einer Abströmfläche aufweist, wobei der Filtermediumkörper eine in sich veränderliche Höhe aufweist, in einem oben beschriebenen, erfindungsgemäßen Luftfilter. Das Filterelement wird mithin verwendet in einem Luftfilter mit einem weiteren Filterelement, das als ein Flachfilterelement ausgebildet ist und einen weiteren Filtermediumkörper mit einer weitere Anströmflache und einer weitere Abströmfläche aufweist, wobei der Luftfilter ein Filtergehäuse aufweist, in dem die beiden Filterelemente bei der Verwendung angeordnet sind, und wobei der Luftfilter weiterhin eine Strömungsleitvorrichtung aufweist, um einen zu filternden Luftstrom wahlweise seriell durch die beiden Filterelemente oder zumindest teilweise an einem der Filterelemente vorbei zu leiten, und wobei zwischen den Filterelementen ein sich erweiternder Bypasskanal ausgebildet ist, wobei im Bereich der größeren Weite des Bypasskanals das Filterelement eine geringere Höhe aufweist. Das Filterelement mit veränderlicher Höhe kann das (in Durchströmungsrichtung) erste oder zweite Filterelement sein. Die sich verjüngende Geometrie des Filterelements wird bei der erfindungsgemäßen Verwendung ausgenutzt, um bei geringem Bauraumbedarf eine strömungstechnisch vorteilhaften Bypasskanal zwischen dem Filterelement und dem weiteren Filterelement einzurichten.

Der Filtermediumkörper kann mit einer Filtermatte, Schaum, einem Wabenkörper oder porösem Material gebildet sein.

Vorzugsweise ist der Filtermediumkörper mit Falten unterschiedlicher Höhe ausgebildet. Der Filtermediumkörper kann aus gefaltetem Filterpapier bestehen. Das Filterelement wird bei der Verwendung so angeordnet, dass sich niedrigere Falten im Bereich der größeren Weite des Bypasskanals befinden.

Die Höhe des Filtermediumkörpers nimmt vorzugsweise kontinuierlich ab. Dies ist im Hinblick auf die Durchströmung des Bypasskanals vorteilhaft.

Alternativ kann die Höhe des Filtermediumkörpers stufenweise abnehmen. Dies kann die Herstellung des Filterelements vereinfachen.

Das Filterelement kann wenigstens ein Rahmenelement aufweisen. Das Seitenband ermöglicht eine seitliche Abdichtung des Filtermediumkörpers. Das Rahmenelement kann ein Seitenband zur Abdichtung von Falten sein. Das Rahmenelement steht im Bereich der niedrigeren Höhe über den Filtermediumkörper über. Insbesondere kann das Rahmenelement bzw. Seitenband im Bereich der niedrigeren Falten über Falzkanten der Falten überstehen. Das Rahmenelement kann eine im Wesentlichen konstante Höhe aufweisen. Das Rahmenelement weist vorteilhaft wenigstens einen Abschnitt geringeren Überstands, insbesondere eine Rücknehmung, auf. Mit anderen Worten ist der Überstand des Rahmenelements lokal reduziert. Wenn das Filtergehäuse einen Vorsprung aufweist, kann durch ein derart gestaltetes Rahmenelement eine definierte Einbaulage des Filterelements erzwungen werden. Ein Einbau des Filterelements in das Filtergehäuse ist nur möglich, indem der Vorsprung angrenzend an den Abschnitt geringeren Überstands angeordnet wird, insbesondere zumindest abschnittsweise in die Rücknehmung eingreift.

Das Filterelement kann eine Dichtung aufweisen, die einen ersten und einen zweiten Dichtungsabschnitt ausbildet, wobei der erste Dichtungsabschnitt den Filtermediumkörper umgibt und der zweite Dichtungsabschnitt eine durchströmbare Öffnung bildet. Der erste Dichtungsabschnitt dient zur Abdichtung des Filtermediums gegenüber dem Filtergehäuse, insbesondere kann der erste Dichtungsabschnitt eine anströmseitige Rohseite gegenüber einer abströmseitigen Reinseite abdichten. Zusätzlich kann der erste Dichtungsabschnitt zur Abdichtung von Gehäuseteilen des Filtergehäuses dienen. Der zweite Dichtungsabschnitt mit der Öffnung dient typischerweise zur Abdichtung von Gehäuseteilen des Filtergehäuses. Die Öffnung ist grundsätzlich frei von Filtermaterial. Der zweite Dichtungsabschnitt mit der Öffnung befindet sich grundsätzlich (radial) außerhalb eines Querschnitts des Filtermediumkörpers. Der erste und der zweite Dichtungsabschnitt können ein gemeinsames Segment der Dichtung umfassen.

Das die Dichtung aufweisende Filterelement wird typischerweise als in Durchströmungsrichtung zweites Filterelement verwendet.

Ein Strömungspfad eines seriell durch die beiden Filterelemente geleiteten Luftstroms kann durch die Öffnung im zweiten Rahmensegment verlaufen.

Vorzugsweise ist eine fluidische Verbindung zwischen der Abströmseite des (zweiten) Filterelements und einem Auslass des Filtergehäuses nur durch die durchströmbare Öffnung hindurch eröffnet. Bei serieller Durchströmung beider Filterelemente strömt dann der gesamte gefilterte Luftstrom durch die Öffnung.

Die Dichtung kann mit Polyurethan, insbesondere Polyurethanschaum, gebildet sein. Die Dichtung kann an den Filtermediumkörper angeformt sein. Eine Härte der Dichtung kann wenigstens 13 Shore A und/oder höchstens 25 Shore A betragen.

Vorzugsweise ist der zweite Dichtungsabschnitt der Dichtung durch ein Versteifungsteil ausgesteift. Dadurch kann sichergestellt werden, dass sich der zweite Dichtungsabschnitt an den vorgesehenen Dichtstellen des Filtergehäuses zur Anlage kommt. Die Dichtung kann an das Versteifungsteil angeformt sein. Insbesondere kann das Versteifungsteil in die Dichtung eingebettet sein.

An dem zweiten Dichtungsabschnitt kann eine Luftleitrippe vorgesehen sein. Die Durchströmung des Luftfilters kann dadurch insbesondere im Bereich der Öffnung optimiert werden.

Vorzugsweise ist die Luftleitrippe einstückig mit dem Versteifungsteil ausgebildet. Dies vereinfacht die Herstellung des Filterelements.

### Kurze Beschreibung der Zeichnungen

Weitere Merkmale und Vorteile der Erfindung ergeben sich aus der nachfolgenden detaillierten Beschreibung von Ausführungsbeispielen der Erfindung, aus den Patentansprüchen sowie anhand der Figuren der Zeichnung, die erfindungsgemäße Einzelheiten zeigen. Die zuvor genannten und noch weiter ausgeführten Merkmale können je einzeln für sich oder zu mehreren in beliebigen, zweckmäßigen Kombinationen bei Varianten der Erfindung verwirklicht sein. Die in der Zeichnung gezeigten Merkmale sind derart dargestellt, dass die erfindungsgemäßen Besonderheiten deutlich sichtbar gemacht werden können. In der Zeichnung zeigen:
- Fig. 1: einen erfindungsgemäßen Luftfilter mit zwei konischen Flachfilterelementen, zwischen denen ein sich erweiternder Bypasskanal ausgebildet ist, in einer schematischen Schnittansicht;
- Fig. 2: das in Durchströmungsrichtung zweite Filterelement des Luftfilters von Figur 1, in einer schematischen Schnittansicht;
- Fig. 3: ein quaderförmiges Filterelement zur Verwendung als zweites Filterelement mit einem ersten konischen Filterelement bei einem Luftfilter ähnlich wie in Figur 1, in einer schematischen Perspektivansicht.

### Ausführungsformen der Erfindung

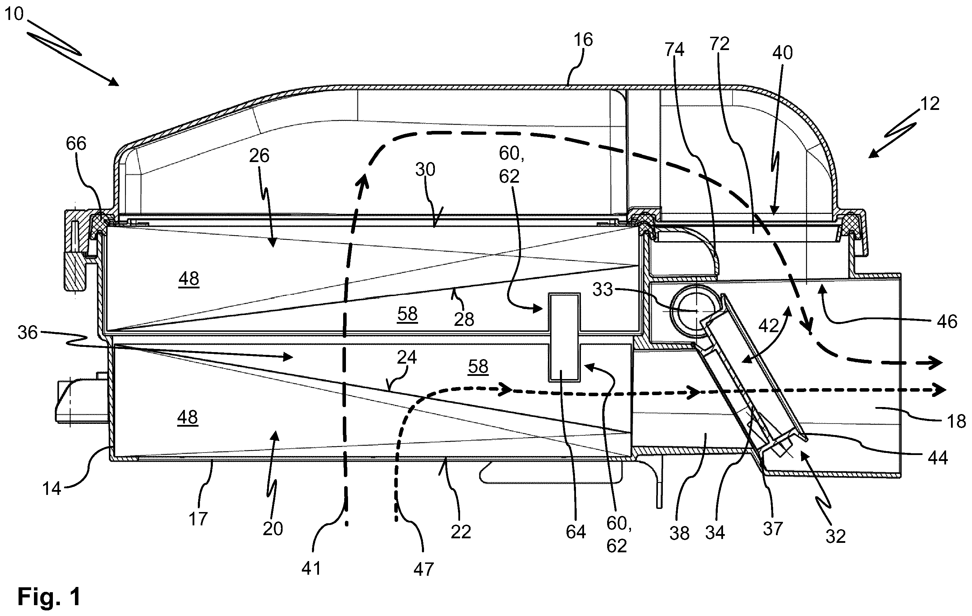

**Figur 1** zeigt einen Luftfilter **10.** Der Luftfilter 10 weist ein Filtergehäuse **12** mit einem Gehäuseunterteil **14** und einem Gehäuseoberteil **16** auf. Zu filternde Luft wird durch einen Einlass **17** ins Filtergehäuse 12 geleitet. Gefilterte Luft ist durch einen Auslass **18** des Filtergehäuses 12 beispielsweise in eine Passagierkabine eines nicht näher dargestellten Kraftfahrzeugs einleitbar.

In dem Filtergehäuse 12 sind zwei Filterelemente **20, 26** angeordnet. Die beiden Filterelemente 20, 26 sind als Flachfilterelemente ausgebildet. Das in Durchströmungsrichtung erste Filterelement 20 weist eine erste Anströmfläche **22** und eine erste Abströmfläche **24** auf. In Durchströmungsrichtung hinter dem ersten Filterelement 20 ist das zweite Filterelement 26 vorgesehen. Das zweite Filterelement 26 weist eine zweite Anströmfläche **28** und eine zweite Abströmfläche **30** auf. Vorliegend erstrecken sich die erste Anströmfläche 22 des ersten Filterelements 20 und die zweite Abströmfläche 30 des zweiten Filterelements 26 parallel zueinander.

Das erste Filterelement 20 kann ein sogenanntes Ambient- oder Vorfilterelement sein und insbesondere Aktivkohle zur Adsorption von schädlichen Gasen enthalten. Das zweite Filterelement 26 kann ein HEPA-Filterelement zum Ausfiltern feiner Partikel sein.

Der Luftfilter 10 weist ferner eine Strömungsleitvorrichtung **32** auf, die hier mit einer mittels eines nicht näher dargestellten Schwenkantriebs um eine Achse **33** schwenkbaren Klappe **34** gebildet ist. In Figur 1 befindet sich der Luftfilter 10 in einem ersten Betriebszustand, in welchem die beiden Filterelemente 20, 26 nacheinander (seriell) durchströmt werden. Hierzu verschließt die Klappe 34 in einer ersten Stellung einen zwischen den beiden Filterelemente 20, 26 ausgebildeten Bypasskanal **36.** Eine an der Klappe 34 ausgebildete Dichtlippe **37** kann hierzu an einer vom Filtergehäuse 10 gebildeten Mündung **38** des Bypasskanals 36 dichtend anliegen. In dem ersten Betriebszustand strömt die gefilterte Luft nach Passieren des zweiten Filterelements 26 durch eine durchströmbare Öffnung **40,** die hier im Übergangsbereich zwischen dem Gehäuseoberteil 16 und Gehäuseunterteil 14 gebildet ist, zu dem Auslass 18. Ein Strömungspfad **41** der Luft im ersten Betriebszustand ist in Figur 1 mit gestrichelten Pfeilen schematisch eingezeichnet.

In einem zweiten Betriebszustand gibt die Strömungsleitvorrichtung 32 den Bypasskanal 36 frei. Die Klappe 34 wird hierzu von der Mündung 38 weg geschwenkt, vergleiche die durch einen Pfeil angedeutete Schwenkrichtung **42.** In einer nicht näher dargestellten zweiten Stellung kann die Klappe 34 mit einer weiteren Dichtlippe **44** eine Reinluft-Passage **46** verschließen, die in Durchströmungsrichtung zwischen dem zweiten Filterelement 26 und dem Auslass 18 angeordnet ist.

In dem zweiten Betriebszustand strömt die durch das erste Filterelement 20 gefilterte Luft durch den Bypasskanal 36 zu dem Auslass 18. In Figur 1 ist ein Strömungspfad **47** der Luft im zweiten Betriebszustand mit punktierten Pfeilen schematisch eingezeichnet. Der Bypasskanal 36 erweitert sich zu seiner Mündung 38 hin. Dies verringert den Strömungswiderstand im Luftfilter 10 zusätzlich zum Wegfall des Durchströmungswiderstands des zweiten Filterelements 26.

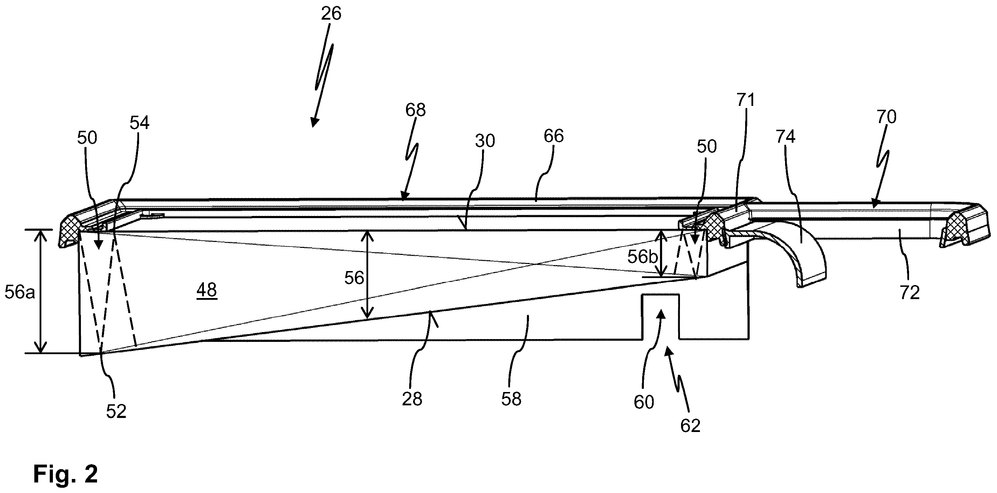

Die beiden Filterelemente 20, 26 weisen jeweils einen Filtermediumkörper **48** auf. Bei der dargestellten Ausführungsform ist der Filtermediumkörper 48 jeweils aus gefaltetem Filterpapier gebildet. Dies ist in **Figur 2** beispielhaft für das zweite Filterelement 26 dargestellt. Falten **50** des Filtermediumkörpers 48 sind anströmseitig und abströmseitig jeweils durch Falzkanten **52** bzw. **54** begrenzt. Eine (senkrecht zur Abström- oder Anströmfläche messbare) Höhe **56** bzw. Dicke des Filtermediumkörpers 48, die bei der dargestellten Ausführungsform der Höhe der Falten 50 entspricht, nimmt dabei entlang des Bypasskanals 36 ab. Eine größte Höhe **56a** des Filtermediumkörpers 48 bzw. seiner Falten 50 kann beispielsweise 48 mm betragen. Eine kleinste Höhe **56b** des Filtermediumkörpers 48 bzw. seiner Falten 50 kann beispielsweise 11 mm betragen.

Hier verringert sich die Dicke der Filterelemente 20, 26 in Durchströmungsrichtung des Bypasskanals 36 im zweiten Betriebszustand (in Figur 1 von links nach rechts) kontinuierlich. Entsprechend erweitert sich der Bypasskanal 36 auf die Mündung 38 zu kontinuierlich. Der über die gesamte Fläche des ersten Filterelements 20 in den Bypasskanal 36 einströmenden Luft steht somit ein zur Mündung 38 hin größer werdender Querschnitt zur Verfügung, sodass der für die Durchströmung des Bypasskanals 36 erforderliche Differenzdruck zwischen der ersten Anströmfläche 22 und dem Auslass 18 gering bleibt. Dies senkt den Energiebedarf und kann die Reichweite eines Kraftfahrzeugs mit dem Luftfilter 10 erhöhen.

Die beiden Filterelemente 20, 26 weisen hier jeweils Rahmenelemente **58** in der Form von Seitenbändern auf, welche die Falten 50 quer zu den Falzkanten 52, 54 und quer zu den jeweiligen An- bzw. Abströmflächen 22-30 abdichten, vergleiche Figuren 1 und 2. Die Rahmenelemente 58 können in Ausführungen Teil eines Kunststoffrahmens sein, in dem der Filtermediumkörper 48 mittelbar oder unmittelbar befestigt ist. Beispielsweise kann der Filtermediumkörper 48 direkt in den Kunststoffrahmen eingeklebt oder mit einem Material des Kunststoffrahmens umspritzt sein. Alternativ kann der Filtermediumkörper Seitenbänder aufweisen, über die der Filtermediumkörper 48 mittelbar mit dem Kunststoffrahmen verbunden ist, insbesondere verklebt ist. Mit niedriger werdenden Falten 50 stehen die Rahmenelemente 58 zunehmend über die anströmseitigen Falzkanten 52 des zweiten Filterelements 26 bzw. die abströmseitigen Falzkanten des ersten Filterelements 20 über. Von einer jeweiligen Rücknehmung **60** abgesehen, sind die Rahmenelemente 58 durchgängig gleich hoch. Die Rücknehmungen 60 bilden jeweils einen Abschnitt **62** geringeren Überstands im Rahmenelement 58.

An einer Seitenwand des Filtergehäuses 12 ist ein Vorsprung **64** ausgebildet, vergleiche Figur 1. Im montierten Zustand der Filterelemente 20, 26 greift der Vorsprung 64 in die Rücknehmung 60 des jeweiligen Rahmenelements 58 ein. Ein Filterelement 20, 26 kann somit nur dann ins Filtergehäuse 12 eingesetzt werden, wenn es richtig ausgerichtet ist und wenn sein Rahmenelement 58 an der passenden Stelle einen geringeren Überstand aufweist.

Das zweite Filterelement 26 weist vorliegend eine Dichtung **66,** hier aus Polyurethanschaum, auf. Die Dichtung 66 bildet zwei, hier rechteckige, Dichtungsabschnitte **68, 70** aus, die ein gemeinsames Dichtsegment **71** umfassen. Ein erster Dichtungsabschnitt 68 ist außen umlaufend an der Abströmfläche 30 des Filtermediumkörpers 48 des zweiten Filterelements 26 angeordnet. Ein zweiter Dichtungsabschnitt 70 steht - in der Art eines Henkels - von dem Filtermediumkörper 48 ab und ist frei von Filtermaterial. Der zweite Dichtungsabschnitt 70 umgibt die durchströmbare Öffnung 40, welche im dargestellten Ausführungsbeispiel fluidisch vor der Reinluft-Passage 46 liegt.

Die Dichtung 66 dient einerseits der Abdichtung von Gehäuseunterteil 14 und Gehäuseoberteil 16 gegeneinander. Andererseits dient der erste Dichtungsabschnitt 68 der Abdichtung des zweiten Filterelements 26 gegenüber dem Filtergehäuse 12, sodass im ersten Betriebszustand die gesamte Luft den Filtermediumkörper 48 des zweiten Filterelements 26 passieren muss.

Der zweite Dichtungsabschnitt 70 ist durch ein Versteifungsteil **72** verstärkt. Einstückig mit dem Versteifungsteil 72 ist eine Luftleitrippe **74** ausgebildet. Im ersten Betriebszustand dient die Luftleitrippe 74 der Führung der gefilterten Luft im Bereich der durchströmbaren Öffnung 40 zu der Reinluft-Passage 46. In Ausführungen kann das Versteifungsteil 72 einteilig mit einem Kunststoffrahmen sein, der die Rahmenelemente 58 aufweist.

Die Abdichtung des ersten Filterelements 20 gegenüber dem Filtergehäuse 12 kann über dessen Rahmenelemente 58, hier die Seitenbänder und nicht näher dargestellte Kopfbänder des ersten Filterelements, erfolgen. Auch das zweite Filterelement 20 weist typischerweise neben zwei Seitenbändern zwei nicht näher dargestellte Kopfbänder auf. Die Seitenbänder und die Kopfbänder bilden eine umlaufende Einfassung der jeweiligen Filtermediumkörper 48.

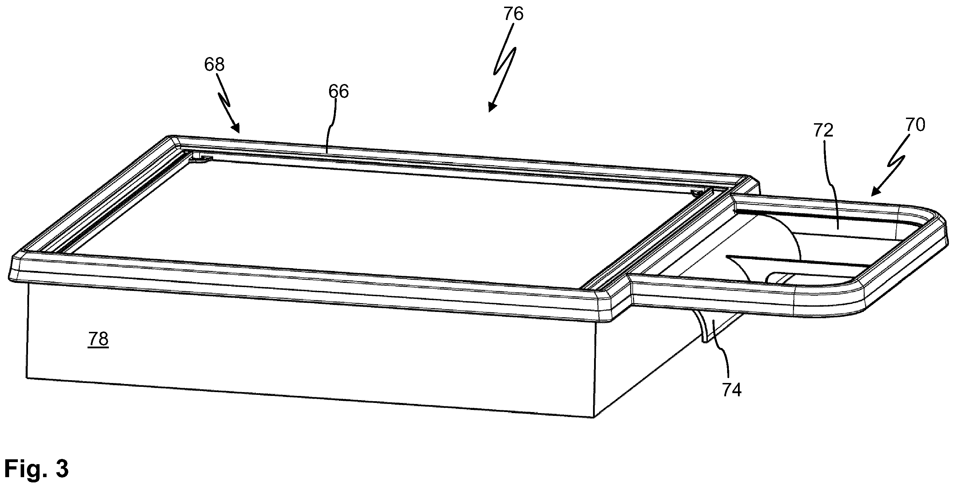

**Figur 3** zeigt ein weiteres zweites Filterelement **76,** welches anstelle des zweiten Filterelements 26 bei einem Luftfilter ähnlich dem in Figur 1 dargestellten verwendet werden könnte. Das Filterelement 76 weist einen quaderförmigen Filtermediumkörper **78** auf. Ein quaderförmiges Filterelement 76 ist erfindungsgemäß gemeinsam mit einem sich verjüngenden Filterelement zu verwenden. Dabei kann entweder, wie hier dargestellt, das zweite Filterelement 76 quaderförmig und das erste Filterelement 20 mit veränderlicher Höhe 56, insbesondere unterschiedlich hohen Falten 50, ausgebildet sein; alternativ könnte das erste Filterelement quaderförmig und das zweite Filterelement mit veränderlicher Höhe, insbesondere unterschiedlich hohen Falten, ausgebildet sein (nicht näher dargestellt). In beiden Fällen bewirken die kleiner werdende Höhe (Dicke) bzw. die niedriger werdenden Falten des einen Filterelements eine Erweiterung des zwischen den beiden Filterelementen ausgebildeten Bypasskanals 36. Es versteht sich, dass bei der Verwendung eines quaderförmigen Filterelements ein Vorsprung 64 am Filtergehäuse 12 zur Sicherstellung der korrekten Einbaulage nur mit einem abschnittsweise zurückgenommenen, überstehenden Seitenband des sich verjüngenden Filterelements zusammenwirkt. Im Hinblick auf die Ausbildung der Dichtung 66 sowie des Versteifungsteils 72 und der Luftleitrippe 74 entspricht das zweite Filterelement 76 von Figur 3 dem oben beschriebenen zweiten Filterelement 26, vergleiche Figuren 1 und 2.

Zusammenfassend betrifft die Erfindung einen Luftfilter mit zwei Filterelementen, die in einem ersten Betriebszustand nacheinander (seriell) durchströmt werden. Zwischen den Filterelementen ist ein Bypasskanal zur zumindest teilweisen Umgehung eines der Filterelemente in einem zweiten Betriebszustand ausgebildet. Der Bypasskanal erweitert sich in Richtung der Bypassströmung durch den Bypasskanal, welche sich im zweiten Betriebszustand einstellt. Wenigstens eines der Filterelemente weist einen Filtermediumkörper auf, dessen Dicke entlang des Bypasskanals - in Richtung der Bypassströmung - abnimmt. Der Filtermediumkörper veränderlicher Höhe bzw. Dicke kann durch Falten eines Filterpapiers erhalten sein. Die entsprechende Einbaulage des sich verjüngenden Filterelements kann sichergestellt werden, indem ein Rahmenelement, insbesondere ein Seitenband, zur Abdichtung des Filtermediumkörpers eine im Wesentlichen konstante Höhe aufweist, sodass es bereichsweise über den Filtermediumkörper, insbesondere über die niedrigeren Falten, übersteht, wobei das Seitenband jedoch abschnittsweise zurückgenommen ist. In diesen Abschnitt geringeren Überstands kann ein Vorsprung des Filtergehäuses eingreifen.

### Bezugszeichenliste

Luftfilter **10**
Filtergehäuse **12**
Gehäuseunterteil **14**
Gehäuseoberteil **16**
Einlass **17**
Auslass **18**
erstes Filterelement **20**
erste Anströmfläche **22**
erste Abströmfläche **24**
zweites Filterelement **26**
zweite Anströmfläche **28**
zweite Abströmfläche **30**
Strömungsleitvorrichtung **32**
Achse **33**
Klappe **34**
Bypasskanal **36**
Dichtlippe **37**
Mündung **38**
durchströmbare Öffnung **40**
Strömungspfad **41** bei serieller Durchströmung
Schwenkrichtung **42**
weitere Dichtlippe **44**
Reinluft-Passage **46**
Strömungspfad **47** bei Bypassströmung
Filtermedium **48**
Falten **50**
Falzkanten **52, 54**
Höhe **56** der Falten 50
größte Höhe **56a**
kleinste Höhe **56b**
Seitenband **58**
Rücknehmung **60**
Abschnitt **62** geringeren Überstands
Vorsprung **64**
Dichtung **66**
erster Dichtungsabschnitt **68**
zweiter Dichtungsabschnitt **70**
gemeinsames Dichtsegment **71**
Versteifungsteil **72**
Luftleitrippe **74**
zweites Filterelement **76**
Filtermedium **78**

## Patentansprüche

1. Luftfilter (10) aufweisend,
- zwei Filterelemente (20, 26), die jeweils als Flachfilterelement ausgebildet sind und einen Filtermediumkörper (48) mit einer Anströmflache (22, 28) und einer Abströmfläche (24, 30) aufweisen,
- ein Filtergehäuse (12), in dem die beiden Filterelemente (20, 26) angeordnet sind,
- und eine Strömungsleitvorrichtung (32), um einen zu filternden Luftstrom wahlweise seriell durch die beiden Filterelemente (20, 26) oder zumindest teilweise an einem zweiten der Filterelemente (26) vorbeizuleiten,
wobei die Abströmfläche (24) eines ersten der Filterelemente (20) und die Anströmfläche (28) des zweiten der Filterelemente (26) unter Ausbildung eines sich erweiternden Bypasskanals (36) voneinander beabstandet sind,
wobei der Filtermediumkörper (48) zumindest eines der Filterelemente (20, 26) eine in sich veränderliche Höhe (56) aufweist, wobei der Filtermediumkörper (48) des zumindest einen Filterelements (20, 26) in einem Bereich einer größeren Weite des Bypasskanals (36) eine geringere Höhe (56) aufweist.

2. Luftfilter (10) nach Anspruch 1, **dadurch gekennzeichnet, dass** bei zumindest einem der Filterelemente (20, 26) der Filtermediumkörper (48) mit Falten (50) unterschiedlicher Höhe (56) ausgebildet ist, wobei im Bereich der größeren Weite des Bypasskanals (36) niedrigere Falten (50) vorgesehen sind, und/oder die Anströmfläche (22) des ersten Filterelements (20) und die Abströmfläche (30) des zweiten Filterelements (26) sich parallel zueinander erstrecken.

3. Luftfilter (10) nach einem der vorhergehenden Ansprüche, **dadurch gekennzeichnet, dass** die Höhe (56) des Filtermediumkörpers (48) des zumindest einen Filterelements (20, 26) kontinuierlich oder stufenweise abnimmt, und/oder beide Filterelemente einen Filtermediumkörper (48) mit in sich veränderlicher Höhe (56) aufweisen, wobei die beiden Filtermediumkörper (48) in einem Bereich einer größeren Weite des Bypasskanals (36) jeweils eine geringere Höhe (56) aufweist.

4. Luftfilter (10) nach einem der vorhergehenden Ansprüche, **dadurch gekennzeichnet, dass** das Filterelement (20, 26) mit veränderlicher Höhe (56) wenigstens ein Rahmenelement (58) aufweist, welches im Bereich der niedrigeren Höhe über den Filtermediumkörper (48) übersteht, wobei das Rahmenelement (58) wenigstens einen Abschnitt (62) geringeren Überstands, insbesondere eine Rücknehmung (60), aufweist, und wobei das Filtergehäuse (12) angrenzend an den Abschnitt (62) geringeren Überstands einen Vorsprung (64) aufweist, der zumindest abschnittsweise in die Rücknehmung (60) eingreift.

5. Luftfilter (10) nach einem der vorhergehenden Ansprüche, **dadurch gekennzeichnet, dass** zumindest eines der Filterelemente (26) eine Dichtung (66) aufweist, die einen ersten und einen zweiten Dichtungsabschnitt (68, 70) ausbildet, wobei der erste Dichtungsabschnitt (68) den Filtermediumkörper (48) umgibt und der zweite Dichtungsabschnitt (70) eine durchströmbare Öffnung (40) einschließt.

6. Luftfilter (10) nach Anspruch 5, **dadurch gekennzeichnet, dass** ein Strömungspfad eines seriell durch die beiden Filterelemente (20, 26) geleiteten Luftstroms durch die durchströmbare Öffnung (40) verläuft.

7. Luftfilter (10) nach Anspruch 5 oder 6, **dadurch gekennzeichnet, dass** eine fluidische Verbindung zwischen der Abströmfläche (30) des zweiten Filterelements (26) und einem Auslass (18) des Filtergehäuses (12) nur durch die durchströmbare Öffnung (40) hindurch eröffnet ist.

8. Luftfilter (10) nach einem der Ansprüche 5 bis 7, **dadurch gekennzeichnet, dass** die Dichtung (66) zwei Gehäuseteile (14, 16) des Filtergehäuses (12) gegeneinander abdichtet.

9. Luftfilter (10) nach einem der vorhergehenden Ansprüche, **dadurch gekennzeichnet, dass** die Strömungsleitvorrichtung (32) mit einer Klappe (34) gebildet ist, welche in einer ersten Stellung den Bypasskanal (36) verschließt und in einer zweiten Stellung den Bypasskanal (36) freigibt.

10. Verwendung eines Filterelements (20, 26), das als Flachfilterelement ausgebildet ist und einen Filtermediumkörper (48) mit einer Anströmflache (22, 28) und einer Abströmfläche (24, 30) aufweist, wobei der Filtermediumkörper (48) eine in sich veränderliche Höhe (56) aufweist, in einem Luftfilter (10) nach einem der vorhergehenden Ansprüche.

11. Verwendung eines Filterelements (20, 26) nach Anspruch 10, **dadurch gekennzeichnet, dass** der Filtermediumkörper (48) mit Falten (50) unterschiedlicher Höhe (56) ausgebildet ist.

12. Verwendung eines Filterelements (20, 26) nach Anspruch 10 oder 11, **dadurch gekennzeichnet, dass** die Höhe (56) des Filtermediumkörpers (48) kontinuierlich oder stufenweise abnimmt.

13. Verwendung eines Filterelements (20, 26) nach einem der Ansprüche 10 bis 12, **dadurch gekennzeichnet, dass** das Filterelement (20, 26) wenigstens ein Rahmenelement (58) aufweist, welches im Bereich der niedrigeren Höhe (56) über den Filtermediumkörper (48) übersteht, wobei das Rahmenelement (58) wenigsten einen Abschnitt (62) geringeren Überstands, insbesondere eine Rücknehmung (60), aufweist.

14. Verwendung eines Filterelements (20, 26) nach einem der Ansprüche 10 bis 13, **dadurch gekennzeichnet, dass** das Filterelement (26) eine Dichtung (66) aufweist, die einen ersten und einen zweiten Dichtungsabschnitt (68, 70) ausbildet, wobei der erste Dichtungsabschnitt (68) den Filtermediumkörper (48) umgibt und der zweite Dichtungsabschnitt (70) eine durchströmbare Öffnung (40) einschließt, und/oder ein Strömungspfad eines seriell durch die beiden Filterelemente (20, 26) geleiteten Luftstroms durch die durchströmbare Öffnung (40) verläuft.

15. Verwendung eines Filterelements (20, 26) nach Anspruch 14, **dadurch gekennzeichnet, dass** eine fluidische Verbindung zwischen der Abströmfläche (30) des Filterelements (26) und einem Auslass (18) des Filtergehäuses (12) nur durch die durchströmbare Öffnung (40) hindurch eröffnet ist.

## Claims

1. An air filter (10) featuring,
- two filter elements (20, 26), each of which is designed as a flat filter element and features a filter medium body (48) with an inflow surface (22, 28) and an outflow surface (24, 30),
- a filter housing (12) in which the two filter elements (20, 26) are disposed,
- and a flow-guiding device (32) for selectively guiding an air flow to be filtered either in series through the two filter elements (20, 26) or at least partially past a second of the filter elements (26),
wherein the outflow surface (24) of a first of the filter elements (20) and the inflow surface (28) of the second of the filter elements (26) are spaced apart from each other to form an expanding bypass channel (36),
wherein the filter medium body (48) of at least one of the filter elements (20, 26) features a variable height (56) within it, wherein the filter medium body (48) of the at least one filter element (20, 26) features a lower height (56) in an area of greater width of the bypass channel (36).

2. The air filter (10) according to claim 1, **characterized in that,** in at least one of the filter elements (20, 26), the filter medium body (48) is formed with folds (50) of varying height (56), wherein lower folds (50) are provided in the area of the greater width of the bypass channel (36), and/or the inflow surface (22) of the first filter element (20) and the outflow surface (30) of the second filter element (26) extend parallel to each other.

3. The air filter (10) according to one of the preceding claims, **characterized in that** the height (56) of the filter medium body (48) of the at least one filter element (20, 26) decreases continuously or gradually, and/or both filter elements feature a filter medium body (48) with a height (56) that varies within it, wherein the two filter medium bodies (48) each feature a lower height (56) in an area of greater width of the bypass channel (36).

4. The air filter (10) according to one of the preceding claims, **characterized in that** the filter element (20, 26) with variable height (56) features at least one frame element (58) which, in the area of the lower height, projects beyond the filter medium body (48), wherein the frame element (58) features at least one section (62) of reduced overhang, in particular a recess (60), and wherein the filter housing (12) features a projection (64) adjacent to the section (62) of reduced overhang, which engages at least section-wise with the recess (60).

5. The air filter (10) according to one of the preceding claims, **characterized in that** at least one of the filter elements (26) features a seal (66) that forms a first and a second seal section (68, 70), wherein the first seal section (68) surrounds the filter medium body (48) and the second seal section (70) encloses a through-flowable orifice (40).

6. The air filter (10) according to claim 5, **characterized in that** a flow path of an air flow passing in series through the two filter elements (20, 26) extends through the through-flowable orifice (40).

7. The air filter (10) according to claim 5 or 6, **characterized in that** a fluid connection between the outflow surface (30) of the second filter element (26) and an outlet (18) of the filter housing (12) is established only through the through-flowable orifice (40).

8. The air filter (10) according to any one of claims 5 to 7, **characterized in that** the seal (66) seals two housing components (14, 16) of the filter housing (12) against one another.

9. The air filter (10) according to one of the preceding claims, **characterized in that** the flow-guiding device (32) is formed by a flap (34) which, in a first position, closes the bypass channel (36) and, in a second position, opens the bypass channel (36).

10. A use of a filter element (20, 26) that is designed as a flat filter element and features a filter medium body (48) with an inflow surface (22, 28) and an outflow surface (24, 30), wherein the filter medium body (48) features a variable height (56), in an air filter (10) according to one of the preceding claims.

11. The use of a filter element (20, 26) according to claim 10, **characterized in that** the filter medium body (48) is designed with folds (50) of varying height (56).

12. The use of a filter element (20, 26) according to claim 10 or 11, **characterized in that** the height (56) of the filter medium body (48) decreases continuously or gradually.

13. The use of a filter element (20, 26) according to any one of claims 10 to 12, **characterized in that** the filter element (20, 26) features at least one frame element (58) which projects beyond the filter medium body (48) in the area of the lower height (56), wherein the frame element (58) features at least one section (62) of reduced overhang, in particular a recess (60).

14. The use of a filter element (20, 26) according to any one of claims 10 to 13, **characterized in that** the filter element (26) features a seal (66) that forms a first and a second seal section (68, 70), wherein the first seal section (68) surrounds the filter medium body (48) and the second seal section (70) encloses a through-flowable orifice (40), and/or a flow path of an air stream passing serially through the two filter elements (20, 26) passes through the through-flowable orifice (40).

15. The use of a filter element (20, 26) according to claim 14, **characterized in that** a fluid connection between the outflow surface (30) of the filter element (26) and an outlet (18) of the filter housing (12) is established only through the through-flowable orifice (40).

## Revendications

1. Filtre à air (10) présentant,
- deux éléments de filtre (20, 26) qui sont chacun conçus comme des éléments de filtre plats et présentant un corps de milieu filtrant (48) avec une surface d'afflux (22, 28) et une surface d'écoulement (24, 30),
- un boîtier de filtre (12) dans lequel sont disposés les deux éléments de filtre (20, 26),
- et un dispositif de guidage d'écoulement (32) pour guider un flux d'air à filtrer soit en série à travers les deux éléments de filtre (20, 26), soit au moins en partie à côté d'un second des éléments de filtre (26),
la surface d'écoulement (24) d'un premier des éléments de filtre (20) et la surface d'afflux (28) du second des éléments de filtre (26) étant espacées l'une de l'autre en formant un canal de dérivation (36) s'élargissant,
le corps de milieu filtrant (48) d'au moins l'un des éléments de filtre (20, 26) présentant une hauteur (56) variable sur sa longueur, le corps de milieu filtrant (48) de l'élément de filtre (20, 26), au moins au nombre d'un, présentant une hauteur (56) réduite dans une zone de plus grande largeur du canal de dérivation (36).

2. Filtre à air (10) selon la revendication 1, **caractérisé en ce que,** pour au moins l'un des éléments de filtre (20, 26), le corps de milieu filtrant (48) est formé de plis (50) de hauteur (56) différente, des plis (50) plus bas étant prévus dans la zone de la plus grande largeur du canal de dérivation (36), et/ou la surface d'afflux (22) du premier élément de filtre (20) et la surface d'écoulement (30) du second élément de filtre (26) s'étendent parallèlement l'une à l'autre.

3. Filtre à air (10) selon l'une quelconque des revendications précédentes, **caractérisé en ce que** la hauteur (56) du corps de milieu filtrant (48) de l'élément de filtre (20, 26), au moins au nombre d'un, diminue de manière continue ou par paliers, et/ou les deux éléments de filtre présentent un corps de milieu filtrant (48) dont la hauteur (56) varie en son sein, les deux corps de milieu filtrant (48) présentant chacun une hauteur (56) moindre dans une zone de plus grande largeur du canal de dérivation (36).

4. Filtre à air (10) selon l'une quelconque des revendications précédentes, **caractérisé en ce que** l'élément de filtre (20, 26) à hauteur variable (56) présente au moins un élément de cadre (58) qui, dans la zone de la hauteur réduite, dépasse du corps de milieu filtrant (48), l'élément de cadre (58) présentant au moins une section (62) à une faible extrémité en porte-à-faux, en particulier un évidement (60), et le boîtier de filtre (12) présentant, à proximité de la section (62) d'une extrémité en porte-à-faux réduite, une saillie (64) qui s'engage au moins par sections dans l'évidement (60).

5. Filtre à air (10) selon l'une quelconque des revendications précédentes, **caractérisé en ce qu'**au moins l'un des éléments de filtre (26) présente un joint d'étanchéité (66) formant une première et une seconde sections d'étanchéité (68, 70), la première section d'étanchéité (68) entourant le corps de milieu filtrant (48) et la seconde sections d'étanchéité (70) entourant un orifice (40) pouvant être traversé par le flux.

6. Filtre à air (10) selon la revendication 5, **caractérisé en ce qu'**un trajet d'écoulement d'un flux d'air acheminé en série à travers les deux éléments de filtre (20, 26) s'étend à travers l'orifice (40) pouvant être traversé.

7. Filtre à air (10) selon la revendication 5 ou 6, **caractérisé en ce qu'**une liaison fluidique entre la surface d'écoulement (30) du second élément de filtre (26) et une sortie (18) du boîtier de filtre (12) n'est établie que par l'intermédiaire de l'orifice (40) pouvant être traversé.

8. Filtre à air (10) selon l'une quelconque des revendications 5 à 7, **caractérisé en ce que** le joint d'étanchéité (66) assure l'étanchéité entre deux parties de boîtier (14, 16) du boîtier de filtre (12).

9. Filtre à air (10) selon l'une quelconque des revendications précédentes, **caractérisé en ce que** le dispositif de guidage d'écoulement (32) est formé d'un clapet (34) qui, dans une première position, ferme le canal de dérivation (36) et, dans une seconde position, libère le canal de dérivation (36).

10. Utilisation d'un élément de filtre (20, 26) qui est conçu comme un élément de filtre plat et qui présente un corps de milieu filtrant (48) avec une surface d'afflux (22, 28) et une surface d'écoulement (24, 30), le corps de milieu filtrant (48) présentant une hauteur (56) variable en son sein, dans un filtre à air (10) selon l'une quelconque des revendications précédentes.

11. Utilisation d'un élément de filtre (20, 26) selon la revendication 10, **caractérisée en ce que** le corps de milieu filtrant (48) est formé de plis (50) de hauteur (56) différente.

12. Utilisation d'un élément de filtre (20, 26) selon la revendication 10 ou 11, **caractérisée en ce que** la hauteur (56) du corps de milieu filtrant (48) diminue de manière continue ou par paliers.

13. Utilisation d'un élément de filtre (20, 26) selon l'une quelconque des revendications 10 à 12, **caractérisée en ce que** l'élément de filtre (20, 26) présente au moins un élément de cadre (58) qui, dans la zone de la hauteur (56) la plus faible, dépasse du corps de milieu filtrant (48), l'élément de cadre (58) présentant au moins une section (62) d'une faible extrémité en porte-à-faux, en particulier un évidement (60).

14. Utilisation d'un élément de filtre (20, 26) selon l'une quelconque des revendications 10 à 13, **caractérisée en ce que** l'élément de filtre (26) présente un joint d'étanchéité (66) qui forme une première et une seconde sections d'étanchéité (68, 70), la première section d'étanchéité (68) entourant le corps de milieu filtrant (48) et la seconde section d'étanchéité (70) entourant un orifice (40) pouvant être traversé, et/ou un trajet d'écoulement d'un flux d'air acheminé en série à travers les deux éléments de filtre (20, 26) passant par l'orifice (40) pouvant être traversé.

15. Utilisation d'un élément de filtre (20, 26) selon la revendication 14, **caractérisée en ce qu'**une liaison fluidique entre la surface d'écoulement (30) de l'élément de filtre (26) et une sortie (18) du boîtier de filtre (12) n'est établie que par l'intermédiaire de l'orifice (40) pouvant être traversé.
